# EUROPÄISCHE PATENTSCHRIFT

(11) **EP 1 062 632 B1**
(45) Veröffentlichungstag und Bekanntmachung des Hinweises auf die Patenterteilung: **20.05.2015**
(21) Anmeldenummer: 99965561.6
(22) Anmeldetag: 24.12.1999
(51) Int. Cl.: G06K 19/07, G06K 7/00

(54) **MOBILER DATENTRÄGER**
MOBILE DATA CARRIER
SUPPORT DE DONNEES MOBILE

(30) Priorität: 07.01.1999 EP 99100168; 07.01.1999 DE 19900261
(43) Veröffentlichungstag der Anmeldung: 27.12.2000
(73) Patentinhaber: NXP B.V., 5656 AG Eindhoven (NL)
(72) Erfinder: DEN BESTEN, Gerrit, W., NL-5656 AA Eindhoven (NL); KESSELS, Jozef, L., W., NL-5656 AA Eindhoven (NL); TIMM, Volker, NL-5656 AA Eindhoven (NL)
(74) Vertreter: Schouten, Marcus Maria
(86) Internationale Anmeldenummer: PCT/EP1999/010405
(87) Internationale Veröffentlichungsnummer: WO 2000/041130

(56) Entgegenhaltungen:
- EP-A- 0 874 327
- US-A- 4 881 199
- US-A- 5 045 770
- US-A- 5 495 241

## Beschreibung

Die Erfindung bezieht sich auf einen mobilen Datenträger, insbesondere eine Chipkarte. Derartige Chipkarten sind auch unter der Bezeichnung Smart Card bekannt geworden.

Zur Ausforschung von auf derartigen Datenträgem gespeicherten Daten durch Unbefugte ist eine Methode publik gemacht worden, bei der aus dem zeitlichen Verlauf einer Versorgungsspannung an Versorgungsspannungsanschlüssen einer Datenverarbeitungsschaltung innerhalb des Datenträgers sowie aus dem zeitlichen Verlauf eines von der Datenverarbeitungsschaltung an den Versorgungsspannungsanschlüssen aufgenommenen Versorgungsstromes auf in der Datenverarbeitungsschaltung verarbeitete Datenmuster zurückgeschlossen werden können soll.

EP 0 874 327 A2 zeigt eine Smart Card mit einer Einrichtung zum Erfassen des Pegels einer durch eine externe Einrichtung bereitgestellten Spannung, wobei ein Aktivierungssignal erzeugt wird, wenn die erfasste Spannung unter einem vorbestimmten Pegel liegt, sowie einer Spannungsregelungseinrichtung, welche die Pegel der bereitgestellten Spannung in Betriebsspannungspegel der Smart Card in Reaktion auf das Aktivierungssignal konvertiert.

US 5,045,770 zeigt eine Regeleinrichtung zum Empfangen elektrischer Energie aus einem externen magnetischen Wechselfeld mittels eines induktiven Resonanzkreises und zum Ausgeben einer geregelten Ausgangsspannung, deren Ausgangsleistung mittels Abzweigung von Eingangsleistung geregelt wird, wobei getrennte Stromwege für den Abzweigstrom und den Ausgabestrom vorgesehen sind und im Ausgabestromweg eine Gleichrichtereinrichtung vorgesehen ist.

US 5,495,241 zeigt ein Verfahren und eine Vorrichtung zur Reduzierung von Verlusten in Einrichtungen für kontaktlose Daten- und Energieübertragung, wobei eine Funktionseinheit in einem beweglichen Teil vorgesehen ist, der die aktuellen Verluste in einer Spannungsregelungseinrichtung bestimmt, wobei ein stationärer Teil, wenn ein Sollwert überschritten wird, die Energiezufuhr reduzieren kann.

US 4,881,199 betrifft eine Leseschaltung für integrierte Logikschaltungen mit einem Speicher, der aus einer Matrix aus Speicherzellen besteht, wobei das Lesen durch Erfassen einer Strom- oder Spannungsänderung erfolgt.

Die Erfindung hat die Aufgabe, bei einem mobilen Datenträger die Ausforschung von Datenmustern durch das vorgenannte Verfahren wenigstens deutlich zu erschweren, wenn nicht unmöglich zu machen.

Die Aufgabe wird durch einen mobilen Datenträger mit den Merkmalen des Anspruch 1 gelöst. Vorteilhafte Weiterbildungen der Erfindung sind in den sich daran angeschlossenen Unteransprüchen 2 und 3 angegeben.

Erfindungegemäßen wird diese Aufgabe gelöst durch eine mobilen Datenträger, insbesondere Chipkarte, mit einer Datenverarbeitungsschaltung und einer Speiseanordnung zum Zuführen elektrischer Energie an Versorgungsspannungsanschlüsse zum Betreiben der Datenverarbeitungsschaltung von einer außerhalb des Datenträgers angeordneten, externen Energiequelle, wobei die Speiseanordnung eine spannungsbegrenzende Regelschaltung, die zu den Versorgungsspannungsanschlüssen der Datenverarbeitungsschaltung parallel angeordnet ist, sowie eine Stromsteueranordnung umfasst, die bezüglich der Energiezufuhr zur Datenverarbeitungsschaltung mit der Parallelanordnung der spannungsbegrenzenden Regelschaltung und der Datenverarbeitungsschaltung in Reihe angeordnet ist.

Durch die Erfindung wird in einfacher und vorteilhafter Weise erreicht, dass von einer außerhalb des Datenträgers angeordneten, externen Energiequelle stets ein konstanter Energiefluss in den Datenträger eingespeist wird. Die Spannung und der Strom, mit denen dieser Energiefluss bewirkt wird, sind an von außerhalb des Datenträgers zugänglichen Schaltungspunkten während des gesamten Betriebes stets konstant und lassen somit keinen Rückschluss auf einzelne Datenverarbeitungsvorgänge innerhalb der Datentverarbeitungsschaltung zu. Insbesondere kann aus dem Energiefluß nicht mehr bitgenau auf die Ausführung einer speziellen Berechnung geschlossen werden.

Für die erfindungsgemäßen, mobilen Datenträger, insbesondere kontaktlose oder auch kontaktbehaftete Chipkarten, hat die Erfindung die Funktion einer Versorgungsquelle mit den Charakteristiken, daß am empfangenden Ende des Pfades in der Anordnung, über den der Energiefluß zur Datenverarbeitungsschaltung erfolgt, die Last unabhängig von der Last auf der speisenden Seite dieses Pfades ist und daß sich die Quelle an der speisenden Seite über einen weiten Aussteuerungsbereich wie eine Stromquelle verhält. Eine derartige Versorgungsquelle kann durch einen Parallelregler konstruiert werden. Insbesondere weist dabei die kontaktlose Energiespeisung einer Chipkarte die Charakteristik einer Konstantstromquelle auf, ohne dabei geregelt werden zu müssen.

Eine vorteilhafte Weiterbildung des erfindungsgemäßen, mobilen Datenträgers besteht darin, daß die Stromsteueranordnung zum Liefern eines wenigstens nahezu lastunabhängigen Speisestroms eingerichtet ist und daß die spannungsbegrenzende Regelschaltung zur Aufnahme eines Überschußstromes ausgebildet ist, der bezüglich des Speisestromes zu einem von der Datenverarbeitungsschaltung an den Versorgungsspannungsanschlüssen aufgenommenen Versorgungsstrom komplementär ist.

Nach einer weiteren, vorteilhaften Ausgestaltung ist der erfindungsgemäße, mobile Datenträger dadurch gekennzeichnet, daß der von der Stromsteueranordnung gelieferte Speisestrom wenigstens nahezu nur von einer von der externen Energiequelle abgegebenen Spannung abhängig gesteuert ist.

Eine weitere Angriffsmöglichkeit bietet sich bei dem eingangs genannten Ausforschungsverfahren bei einem mobilen Datenträger dadurch, daß in einer Datenverarbeitungsschaltung im Datenträger synchron getaktete Logikelemente eingesetzt sind, die mit Hilfe eines synchronen Taktsignals zeitlich streng geordnet steuerbar sind. Diese zeitliche Steuerung erleichtert die Zuordnung von Bitmustern zu Datenverarbeitungsvorgängen bei einem unberechtigten Zugriff.

Nach einer bevorzugten Weiterbildung ist der erfindungsgemäße, mobile Datenträger dadurch gekennzeichnet, daß die Datenverarbeitungsschaltung mit asynchron arbeitenden Logikelementen ausgebildet ist, deren Signalverarbeitungsgeschwindigkeit von einer an den Versorgungsspannungsanschlüssen der Datenverarbeitungsschaltung angelegten Versorgungsspannung abhängig ist.

Durch Einsatz asynchron arbeitender Logikelemente in der Datenverarbeitungsschaltung des erfindungsgemäßen, mobilen Datenträgers kann eine Verwirrung beim unberechtigten Zugriff erreicht werden. Schaltvorgänge, die durch derartige, asynchron arbeitende Logikelemente auf die Versorgungsspannungsanschlüsse der Datenverarbeitungsschaltung übertragen werden, erzeugen dort ein unkorrelierbares Muster, aus dem nicht auf verarbeitete Datenmuster rückgeschlossen werden kann. Vorteilhaft ist dabei die Signalverarbeitungsgeschwindigkeit der Logikelemente von der Versorgungsspannung abhängig. Der Datendurchsatz der Datenverarbeitungsschaltung wird somit selbsttätig der verfügbaren Versorgungsspannung angepaßt. Eine derart ausgebildete Datenverarbeitungsschaltung ist über einen weiten Versorgungsspannungsbereich funktionsfähig bei vergleichsweise geringem Schaltungsaufwand.

In dieser Ausgestaltung weist der erfindungsgemäße, mobile Datenträger den weiteren Vorteil auf, daß keine Interferenz von Signalen aus der Datentverarbeitungsschaltung mit Signalen erfolgt, die dem mobilen Datenträger von außerhalb zugeführt werden oder die der mobile Datenträger nach außerhalb abgibt. Der Schutz gegen das eingangs genannte Ausforschungsverfahren ist besonders hoch, da nicht einmal die elektromagnetische Abstrahlung der Datenverarbeitungsschaltung im mobilen Datenträger Informationen über Datenmuster in der Datenverarbeitungsschaltung enthält. Der vom mobilen Datenträger aufgenommene Speisestrom ist von den verarbeiteten Datenmustern unabhängig. Je nach Leistungsfähigkeit der Energiezufuhr zum mobilen Datenträger wird die Verarbeitungsgeschwindigkeit in der Datenverarbeitungsschaltung stets auf den optimal möglichen Wert eingestellt. Gegenüber einer Ausbildung der Datenverarbeitungsschaltung mit synchron getakteten Logikelementen kann insbesondere ein wesentlich kleiner dimensionierter Filterkondensator zur Störunterdrückung eingesetzt werden. Bezüglich der Ausforschung von Datenmustern in der Datenverarbeitungsschaltung wird insbesondere eine Verschleierung der Zeitbereiche erzielt, in denen die Dateneingabe, Datenausgabe und Berechnungen durchgeführt werden. Es kann erreicht werden, daß von außen nicht mehr möglich ist, festzustellen, wann ein wirklicher Rechenvorgang oder eine Eingabe oder Ausgabe stattfindet.

Ausführungsbeispiele der Erfindung sind in der Zeichnung dargestellt und werden im nachfolgenden näher beschrieben. Es zeigen
Fig. 1 blockschematisch ein erstes Ausführungsbeispiel,
Fig. 2 blockschematisch ein zweites Ausführungsbeispiel,
Fig. 3 eine detailliertere Darstellung eines dritten Ausführungsbeispiels,
Fig. 4 eine detailliertere Darstellung eines vierten Ausführungsbeispiels und
Fig. 5 eine blockschematische Darstellung eines erfindungsgemäßen, mobilen Datenträgers.

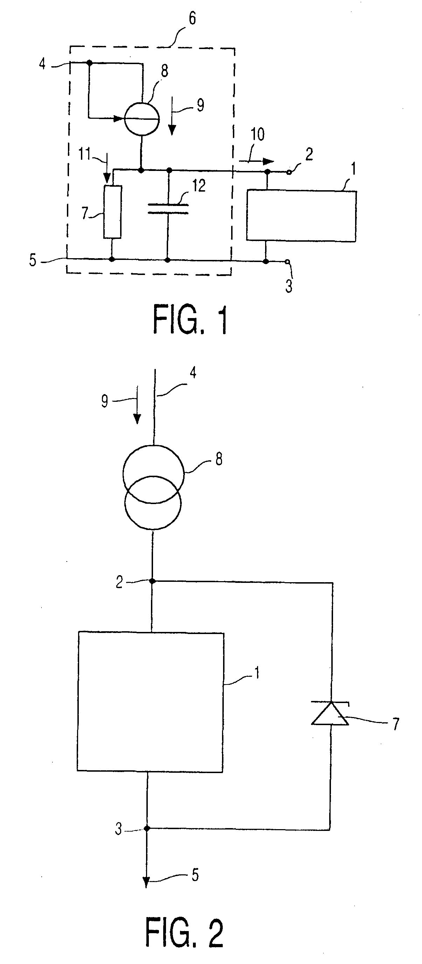

Die Anordnung nach Fig. 1 umfaßt eine Datentverarbeitungsschaltung 1 mit zwei Versorgungsspannungsanschlüssen 2, 3. Über diese wird der Datenverarbeitungsschaltung 1 eine Versorgungsspannung zugeleitet, die der Energiezufuhr zur Datenverarbeitungsschaltung 1 dient. Von einer externen, außerhalb des Datenträgers angeordneten und in Fig.1 nicht dargestellten Energiequelle wird elektrische Energie über zwei Anschlüsse 4, 5 zugeführt. Beispielsweise sind die Anschlüsse 4, 5 mit einer Schaltungsanordnung verbunden, die bei einer kontaktlosen Chipkarte eine übertragene elektrische Spannung gleichrichtet und diese gleichgerichtete Spannung zur Energieversorgung der Datenverarbeitungsschaltung 1 zur Verfügung stellt.

Die Anschlüsse 4, 5 bilden Eingänge einer Speiseanordnung 6, die eine spannungsbegrenzende Regelschaltung 7 und eine Stromsteueranordnung 8 umfaßt. Die spannungsbegrenzende Regelschaltung 7 ist zu den Versorgungsspannungsanschlüssen 2, 3 parallel angeordnet. Die Stromsteueranordnung 8 ist zu der Parallelschaltung der spannungsbegrenzenden Regelschaltung 7 und der Datenverarbeitungsschaltung 1 in Reihe angeordnet. Diese Reihenanordnung ist zwischen den Anschlüssen 4 und 5 angeordnet. Die Stromsteueranordnung 8 ist zum Liefern eines wenigstens nahezu lastunabhängigen Speisestroms eingerichet, der in Fig. 1 durch den Pfeil mit dem Bezugszeichen 9 angedeutet ist. Wenigstens in einem bestimmten Aussteuerungsbereich weist die Stromsteueranordnung 8 somit das Verhalten einer wenigstens nahezu idealen Stromquelle auf. Der Speisestrom 9 kann allenfalls durch eine zwischen den Anschlüssen 4 und 5 anliegende Spannung gesteuert werden, um die Energiezufuhr zur Datenverarbeitungsschaltung 1 dieser Spannung zwischen den Anschlüssen 4 und 5 anzupassen.

Die Datenverarbeitungsschaltung 1 ist bevorzugt mit asynchronen Logikelementen ausgebildet, deren Signalverarbeitungsgeschwindigkeit von dem zur Verfügung stehenden Speisestrom 9 als maximalem Versorgungsstrom an den Versorgungsspannungsanschlüssen 2, 3 abhängig ist. Je nach in der Datenverarbeitungsschaltung I vorgenommenen Operationen wird jedoch der Versorgungsstrom, in Fig. 1 mit dem Pfeil 10 bezeichnet, geringer sein als der Speisestrom 9. Ein Überschußstrom, dargestellt durch den Pfeil 11 in Fig. 1, der bezüglich des Speisestromes 9 zu dem Versorgungsstrom 10 komplementär ist, fließt durch die spannungsbegrenzende Regelschaltung 7 ab. Dadurch kann der Speisestrom 9 datenunabhängig bemessen werden. Parallel zu den Versorgungspannungsanschlüssen 2, 3 ist außerdem ein Kondensator 12 angeordnet, der insbesondere bei kontaktlosen Chipkarten zur Vermeidung von Interferenzen zwischen Signalen in der Datenverarbeitungsschaltung 1 und Signalen dient, die von der Chipkarte von außerhalb empfangen oder nach außerhalb übertragen werden. Bei der erfindungsgemäßen Ausbildung des mobilen Datenträgers kann dieser Kondensator 12 sehr klein dimensioniert werden.

Die spannungsbegrenzende Regelschaltung 7 hat neben der Aufnahme des Überschußstromes 11 die Funktion, die Versorgungsspannung an den Versorgungsspannungsanschlüssen 2, 3 innerhalb eines vorgegebenen Spannungsbereichs zu halten. Der Kondensator 12 dient außerdem zur Mittlung, d.h. zum Ausgleich von Lastspitzen in der Datenverarbeitungsschaltung 1. Da diese durch Verwendung asynchroner Logikelemente bereits stark vermindert werden können, ist auch hierfür nur ein kleiner Kondensator erforderlich.

Mit dem Aufbau gemäß Fig. 1 kann zur Ausregelung von datenabhängigen Versorgungsströmen auf eine Regelschleife verzichtet werden, die stets eine endliche Regelgeschwindigkeit aufweist und damit konstruktionsbedingt keine vollständige Unterdrückung derartiger Datenabhängigkeiten in der Energiezufuhr bewirken kann. Beim erfindungsgemäßen, mobilen Datenträger ist der Speisestrom 9 vollständig konstant ohne Datenabhängigkeit. Durch die spannungsbegrenzende Wirkungsweise der Regelschaltung 7 wird erreicht, daß die Stromsteueranordnung 8 auch bei schwankenden Versorgungsströmen 10 in ihrem Regelbereich bleibt und somit der Speisestrom 9 konstant gehalten werden kann.

Durch die Steuerung der Stromsteueranordnung 8 nach der Spannung an den Anschlüssen 4, 5 kann der Speisestrom 9 an die Versorgungsstrom-VersorgungsspannungsCharakteristik der Datentverarbeitungsschaltung 1 angepaßt werden.

Fig. 2 zeigt eine vereinfachte, blockschematische Darstellung, in der mit Fig. 1 übereinstimmende Elemente mit denselben Bezugszeichen versehen sind. Die spannungsbegrenzende Regelschaltung 7 wird hier durch eine Zenerdiode dargestellt, und die Stromsteueranordnung 8 ist durch eine ideale Stromquelle wiedergegeben. Diese Stromquelle ist als ungeregelte Stromquelle, d.h. nicht einstellbar, dargestellt. Durch die Zenerdiode 7 wird die Versorgungsspannung für die Datenverarbeitungsschaltung 1 in einem weiten Bereich der Energiezufuhr über die Anschlüsse 4, 5 sowie der Signalverarbeitungsvorgänge in der Datenverarbeitungsschaltung 1 konstant gehalten.

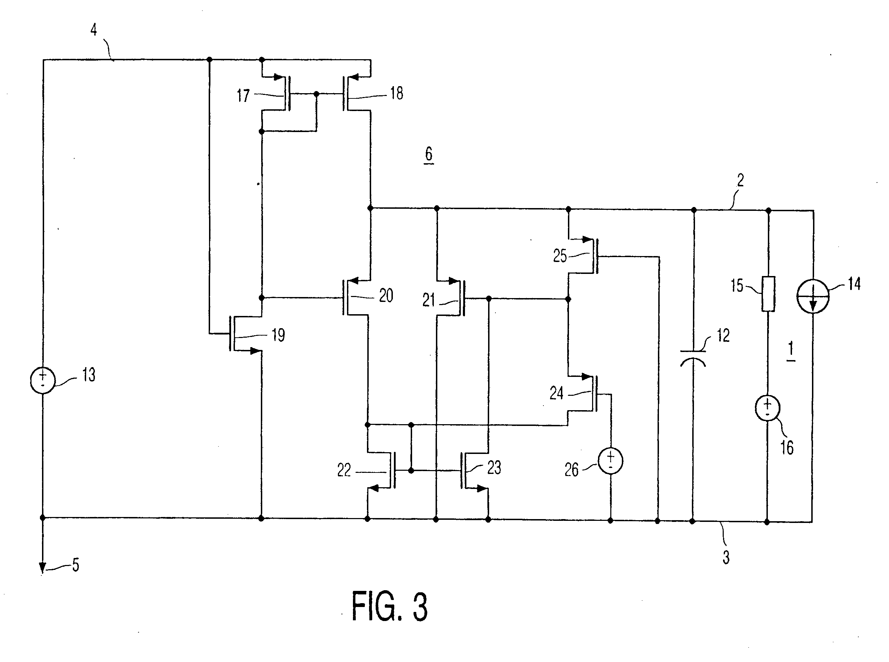

Das Ausführungsbeispiel nach Fig. 3 zeigt eine etwas detailliertere Darstellung der Speiseanordnung 6. Bereits beschriebene Schaltungselemente sind wieder mit denselben Bezugszeichen versehen. Die Energiezufuhr über die Anschlüsse 4, 5 erfolgt aus einer schematisch dargestellten Spannungsquelle 13. Als Ersatzschaltbild für die Datenverarbeitungsschaltung 1 dient die Parallelschaltung einer Stromquelle 14 mit der Reihenschaltung aus einem Widerstand 15 und einer Spannungsquelle 16.

Die Speiseanordnung 6 gemäß Fig. 3 umfaßt einen ersten und einen zweiten Transistor 17, 18, die mit ihren Source-Anschlüssen mit dem Anschluß 4 verbunden sind. Der Gate-Anschluß des zweiten Transistors 18 ist mit dem Gate-Anschluß des ersten Transistors 17 und mit dessen Drain-Anschluß verbunden. Der erste und der zweite Transistor 17, 18 bilden einen Stromspiegel.

Ein dritter Transistor 19 ist mit seinem Drain-Anschluß an den Drain-Anschluß des ersten Transistors 17 und an einen Gate-Anschluß eines vierten Transistors 20 angeschlossen. Mit seinem Gate-Anschluß ist der dritte Transistor 19 an den Anschluß 4 geführt. Ein Source-Anschluß des dritten Transistors 19 ist mit dem Anschluß 5 verbunden.

Der vierte Transistor 20 ist mit seinem Source-Anschluß an den Drain-Anschluß des zweiten Transistors 18 und an den Versorgungsspannungsanschluß 2 angeschlossen. Ein Drain-Anschluß des vierten Transistors 20 ist mit einem Drain-Anschluß eines sechsten Transistors 22, mit dessen Gate-Anschluß, mit einem Gate-Anschluß eines siebten Transistors 23und mit einem Drain-Anschluß eines achten Transistors 24 verbunden. Die Source-Anschlüsse des sechsten und siebten Transistors 22, 23 sind gemeinsam mit dem Anschluß 5 verbunden, so daß der sechste und der siebte Transistor 22, 23 ebenfalls einen Stromspiegel bilden. Ein fünfter Transistor 21 ist mit seinem Source-Anschluß an den Versorgungsspanungsanschluß 2 angeschlossen, mit seinem Drain-Anschluß an den Anschluß 5 geführt und mit seinem Gate-Anschluß mit dem Drain-Anschluß des siebten Transistors 23 verbunden. Außerdem besteht eine Verbindung zwischen dem Gate-Anschluß des fünften Transistors 21 und dem Source-Anschluß des achten Transistors 24 sowie dem Drain-Anschluß eines neunten Transistors 25. Ein Source-Anschluß des neunten Transistors 25 ist ebenfalls mit dem Versorgungsspannungsanschluß 2 verbunden. Während ein Gate-Anschluß des neunten Transistors 25 mit dem Versorgungsspannungsanschluß 3 unmittelbar verbunden ist, ist der Gate-Anschluß des achten Transistos 24 über eine Referenzquelle 26 an diesen Versorgungsspannungsanschluß 3 geführt.

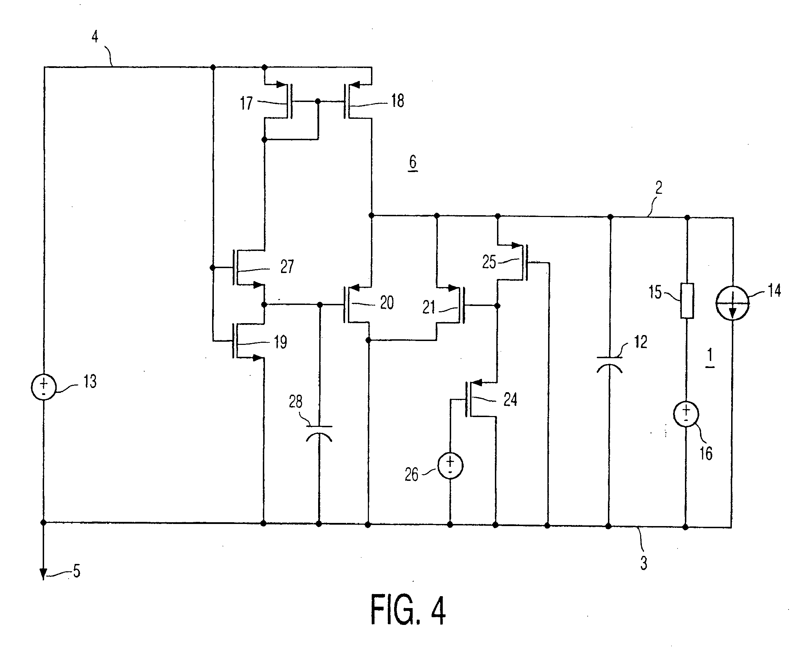

Fig. 4 zeigt eine Abwandlung des Ausführungsbeispiels nach Fig. 3, in der aus Fig. 3 bereits bekannte Elemente wieder mit denselben Bezugszeichen versehen sind. Gegenüber Fig. 3 ist in der Schaltung nach Fig. 4 ein zehnter Transistor 27 eingefügt, dessen Gate-Anschluß mit dem Gate-Anschluß des dritten Transistors 19 verbunden ist. Die Source-Drain-Strecke des zehnten Transistors 27 ist in die Verbindung zwischen dem dritten und dem ersten Transistor 19 bzw. 17 derart eingefügt, daß die Drain-Anschlüsse des zehnten und es ersten Transistors 27, 17 miteinander und der Source-Anschluß des zehnten Transistors 27 mit dem Drain-Anschluß des dritten Transistors 19 sowie dem Gate-Anschluß des vierten Transistors 20 verbunden ist. Ein zweiter Kondensator 28 ist zwischen dem Gate-Anschluß des vierten Transistors 20 und dem Anschluß 5 eingefügt.

Gegenüber Fig. 3 ist in Fig. 4 ferner der Stromspiegel aus dem sechsten Transistor 22 und dem siebten Transistor 23 entfallen. Demzufolge ist der Drain-Anschluß des vierten Transistors 20 unmittelbar an den Anschluß 5 angeschlossen. Auch der Drain-Anschluß des achten Transistors 24 ist unmittelbar mit dem Anschluß 5 verbunden.

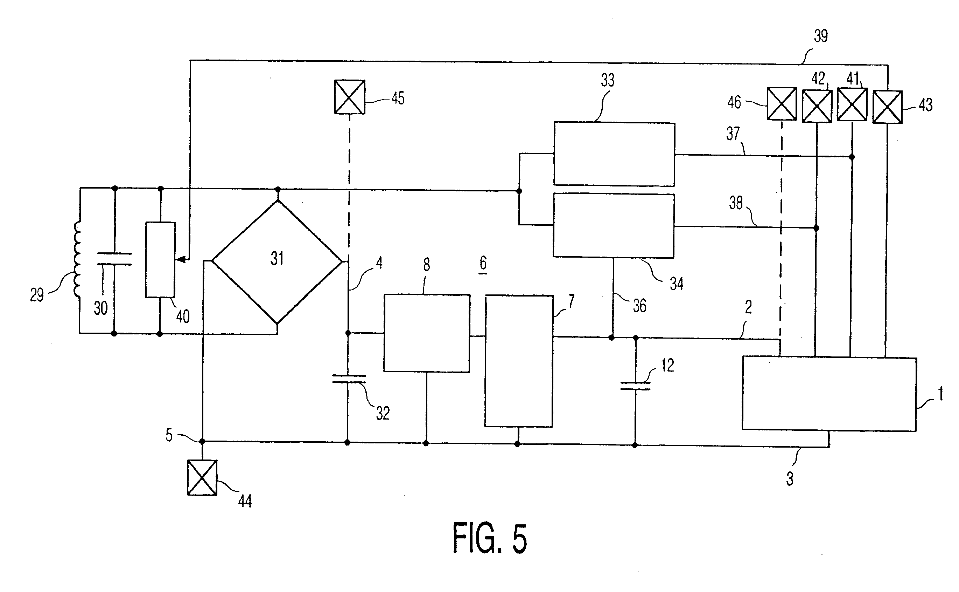

Fig. 5 zeigt blockschematisch ein Ausführungsbeispiel eines erfindungsgemäßen, mobilen Datenträgers, der sowohl für kontaktbehaftete als auch für kontaktlose Verbindungen eingerichtet ist. Mit Elementen aus den vorbeschriebenen Figuren übereinstimmende Elemente sind wieder mit denselben Bezugszeichen versehen.

Zur kontaktlosen Energiezufuhr und Datenübertragung enthält der Datenträger gemäß Fig. 5 einen Resonanzkreis aus einer Induktivität 29 und einem dritten Kondensator 30. Bei Zufuhr bei hochfrequenter elektrischer Energie über den Resonanzkreis 29, 30 wird an diesem eine Spannung erzeugt, die über eine Gleichrichteranordnung 31 den Anschlüssen 4, 5 zugeleitet wird. Ein vierter Kondensator 32, der mit den Anschlüssen 4, 5 verbunden ist, dient der Siebung und Glättung der Spannung an den Anschlüssen 4, 5. Über die Stromsteueranordnung 8 und die spannungsbegrenzende Regelschaltung 7 wird die Energie der Datenverarbeitungsschaltung 1 zur Speisung zugeleitet.

Der Datenträger gemäß Fig. 5 umfaßt weiterhin eine Taktaufbereitungsschaltung 33 sowie eine Datenaufbereitungsschaltung 34, denen beiden über den Resonanzkreis 29, 30 zugeführte Daten- bzw. Taktsignale zur Trennung und Signalformung über eine Leitung 35 zugeführt werden. Die Taktaufbereitungsschaltung 33 und die Datenaufbereitungsschaltung 34 werden außerdem ebenfalls aus der Speiseanordnung 6 mit Energie versorgt, was in Fig. 5 durch die Verbindung 36 schematisch angedeutet ist. Über eine Taktleitung 37 bzw. eine Datenleitung 38 werden Taktsignale bzw. Datensignale der Datenverarbeitungsschaltung 1 zugeführt.

Zur Abgabe von Datensignalen von der Datenverarbeitungsschaltung 1 werden diese Datensignale über eine weitere Datenleitung 39 einer Modulationseinrichtung 40 zugeführt, die beispielsweise den Resonanzkreis 29, 30 über eine Belastungsmodulation beeinflußt.

Zur kontaktbehafteten Verbindung des mobilen Datenträgers gemäß Fig. 5 mit externen Anordnungen zur Datenübertragung und Energiezufuhr sind die Taktleitung 37 mit einem ersten Kontakt 41, die Datenleitung 38 mit einem zweiten Kontakt 42, die weitere Datenleitung 39 mit einem dritten Kontakt 43 und der Anschluß 5 mit einem vierten Kontakt 44 verbunden. Zur Energiezufuhr ist weiterhin ein fünfter Kontakt 45 vorgesehen, der an den Anschluß 4 angeschlossen ist. Auf diese Weise gelangen Schwankungen des Versorgungsstromes an den Versorgungsspannungsanschlüssen 2, 3 nicht über den fünften Kontakt 45 nach außerhalb des mobilen Datenträgers. Dieses wäre der Fall, wenn anstelle des fünften Kontaktes 45 ein sechster Kontakt 46 vorgesehen wäre, der unmittelbar mit dem Versorgungsspannungsanschluß 2 verbunden ist. Über einen solchen sechsten Kontakt 46 wären unmittelbare Detektionen von Schwankungen des Versorgungsstromes für die Datenverarbeitungsschaltung 1 möglich.

## Patentansprüche

1. Mobiler Datenträger, insbesondere Chipkarte, mit einer Datenverarbeitungsschaltung (1) und einer Speiseanordnung (6) zum Zuführten elektrischer Energie an Versorgungsspannungsanschlüsse (2, 3) zum Betreiben der Datenverarbeitungsschaltung (1) von einer außerhalb des Datenträgers angeordneten, externen Energiequelle,
wobei die Speiseanordnung (6) eine spannungsbegrenzende Regelschaltung (7), die zu den Versorgungsspannungsanschlüssen (2, 3) der Datenverarbeitungsschaltung (1) parallel angeordnet ist, umfasst,
**dadurch gekennzeichnet,**
**dass** die Speiseanordnung (6) weiter eine Stromsteueranordnung (8) umfasst, die bezüglich der Energiezufuhr zur Datenverarbeitungsschaltung (1) mit der Parallelanordnung der spannungsbegrenzenden Regelschaltung (7) und der Datenverarbeitungsschaltung (1) in Reihe angeordnet ist,
**dass** die Stromsteueranordnung (8) zum Liefern eines wenigstens nahezu lastunabhängigen Speisestroms (9) eingerichtet ist, und
**dass** die spannungsbegrenzende Regelschaltung (7) zur Aufnahme eines Überschussstromes (11) ausgebildet ist, der bezüglich des Speisestromes (9) zu einem von der Datenverarbeitungsschaltung (1) an den Versorgungsspannungsanschlüssen (2, 3) aufgenommenen Versorgungsstrom (10) komplementär ist.

2. Mobiler Datenträger nach Anspruch 1, **dadurch gekennzeichnet,**
**dass** der von der Stromsteueranordnung (8) gelieferte Speisestrom (9) wenigstens nahezu nur von einer von der externen Energiequelle abgegebenen Spannung abhängig gesteuert ist.

3. Mobiler Datenträger nach Anspruch 1 oder 2, **dadurch gekennzeichnet,**
**dass** die Datenverarbeitungsschaltung (1) mit asynchron arbeitenden Logikelementen ausgebildet ist, deren Signalverarbeitungsgeschwindigkeit von einer an den Versorgungsspannungsanschlüssen (2, 3) der Datenverarbeitungsschaltung (1) angelegten Versorgungsspannung abhängig ist.

## Claims

1. Mobile data carrier, in particular a chip card, with a data processing circuit (1) and a feeder arrangement (6) for supplying electrical energy to supply voltage terminals (2, 3) for operating of the data processing circuit (1) of an energy source which is arranged external of the data carrier,
wherein the feeder arrangement (6) comprises a voltage limiting regulating circuit (7) which is arranged in parallel to the supply voltage terminals (2, 3) of the data processing circuit (1),
**characterized in that**
the feeder arrangement (6) further comprises a current control arrangement (8) which is, with respect to the energy supply to the data processing circuit (1), arranged in series with the parallel arrangement of the voltage limiting regulatory circuit (7) and the data processing circuit (1),
the current control arrangement (8) is configured for delivering of one at least almost load-independent feeding current (9), and
the voltage limiting regulatory circuit (7) is designed for reception of an excess current (11) which is, with respect to the feeding current (9), complementary to a supply current (10) which has been received by the data processing circuit (1) at the supply voltage terminals (2, 3).

2. Mobile data carrier according to claim 1,
**characterized in that**
the feeding current (9) delivered by the current control arrangement (8) is at least almost controlled dependent on only a voltage emitted by the external energy source.

3. Mobile data carrier according to claim 1 or 2,
**characterized in that**
the data processing circuit (1) is designed with asynchronously operating logic elements which signal processing speed is dependent on a supply voltage applied at one of the supply voltage terminals (2, 3) of the data processing circuit (1).

## Revendications

1. Support mobile de données, en particulier carte à puce, doté d'un circuit (1) de traitement de données et d'un ensemble d'alimentation (6) qui amène de l'énergie électrique à des bornes (2, 3) de tension d'alimentation pour alimenter le circuit (1) de traitement de données depuis une source d'énergie externe disposée à l'extérieur du support de données,
l'ensemble d'alimentation (6) comprenant un circuit de régulation (7) qui limite la tension et disposé en parallèle aux bornes (2, 3) de tension d'alimentation du circuit (1) de traitement de données, **caractérisé en ce que**
l'ensemble d'alimentation (6) comporte en outre un ensemble (8) de commande de courant raccordé en série sur l'apport d'énergie au circuit (1) de traitement de données qui présente l'ensemble parallèle formé du circuit (7) de régulation limitant la tension et du circuit (1) de traitement de données,
**en ce que** l'ensemble (8) de commande de courant est conçu pour délivrer un courant d'alimentation (9) pratiquement indépendant de la charge et
**en ce que** le circuit (7) de régulation limitant la tension est configuré pour reprendre un courant en excès (11) complémentaire du courant d'alimentation (9) par rapport à un courant d'alimentation (10) repris par le circuit (1) de traitement de données sur les bornes (2, 3) de tension d'alimentation.

2. Support mobile de données selon la revendication 1, **caractérisé en ce que** le courant d'alimentation (9) délivré par l'ensemble (8) de commande de courant est commandé au moins de manière pratiquement indépendante uniquement par une tension délivrée par la source d'énergie externe.

3. Support mobile de données selon les revendications 1 ou 2, **caractérisé en ce que** le circuit (1) de traitement de données est configuré avec des éléments logiques travaillant de manière asynchrone et dont la vitesse de traitement des signaux dépend de la tension d'alimentation appliquée sur les bornes (2, 3) de tension d'alimentation du circuit (1) de traitement de données.
